# FASCICULE DE BREVET EUROPEEN

(11) **EP 4 412 850 B1**
(45) Date de publication et mention de la délivrance du brevet: **29.10.2025**
(21) Numéro de dépôt: 22773763.2
(22) Date de dépôt: 01.09.2022
(51) Int. Cl.: B60K 11/02, F01P 11/02, B60H 1/00

(54) **PROCÉDÉ DE DEGAZAGE DE CIRCUITS CALOPORTEURS D'UN VÉHICULE ÉLECTRIQUE**
VERFAHREN ZUM ENTGASEN DER WÄRMEÜBERTRAGUNGSKREISLÄUFE EINES ELEKTROFAHRZEUGS
METHOD FOR DEGASSING THE HEAT-TRANSFER CIRCUITS OF AN ELECTRIC VEHICLE

(30) Priorité: 06.10.2021 FR 2110580
(43) Date de publication de la demande: 14.08.2024
(73) Titulaire: Stellantis Auto SAS, 78300 Poissy (FR)
(72) Inventeur: BALENGHIEN, Olivier, 93390 CLICHY SOUS BOIS (FR); FEASSON, Julien, 90400 DANJOUTIN (FR)
(74) Mandataire: PSIP
(86) Numéro de dépôt international: PCT/FR2022/051646
(87) Numéro de publication internationale: WO 2023/057694

(56) Documents cités:
- WO-A1-2020/084209
- WO-A1-2020/108542
- WO-A1-2022/005373
- US-B2- 10 833 379
- US-B2- 11 065 934

## Description

La présente invention porte sur un procédé de dégazage de circuits caloporteurs d'un véhicule électrique. L'invention est destinée à être mise en œuvre lors d'une opération de maintenance du véhicule automobile.

Un véhicule électrique comporte généralement trois circuits caloporteurs imbriqués. Un premier circuit caloporteur dit circuit HT (pour "Haute Température") est le circuit caloporteur de l'habitacle apte à chauffer ou refroidir l'habitacle.

Un deuxième circuit caloporteur, dit circuit BT (pour "Basse Température") est le circuit caloporteur du groupe motopropulseur électrique apte à refroidir la machine électrique tournante, le module électronique de puissance comportant notamment un onduleur, et le module de recharge ou OBCDC (pour "On-Board Charger" à courant continu) intégrant un chargeur et un transformateur.

Un troisième circuit caloporteur, dit circuit TBT (pour "Très Basse Température"), est le circuit caloporteur de la batterie haute tension apte à chauffer ou refroidir la batterie haute tension connectée électriquement à la machine électrique tournante par l'intermédiaire d'un onduleur.

Par rapport à un véhicule à motorisation thermique, l'ajout d'un circuit caloporteur supplémentaire (le circuit caloporteur de la batterie) rend la procédure de dégazage particulièrement complexe. Or, si le dégazage est mal réalisé dans un seul des circuits caloporteurs, l'air non évacué finit par revenir dans le circuit caloporteur du groupe motopropulseur électrique, ce qui est susceptible d'engendrer une surchauffe dans certains modes de recharge rapide de la batterie et donc un arrêt de la charge avant que la batterie soit pleine.

En outre l'état de la technique est connu du document US11065934B2.

Il existe donc le besoin de développer un procédé pour assurer un dégazage complet de l'ensemble de ces trois circuits caloporteurs imbriqués.

L'invention vise à combler efficacement ce besoin en proposant un procédé de dégazage d'un ensemble de circuits caloporteurs d'un véhicule automobile électrique comportant un circuit caloporteur d'un habitacle, un circuit caloporteur d'un groupe motopropulseur électrique, et un circuit caloporteur d'une batterie de traction, lesdits circuits caloporteurs étant reliés à un collecteur auquel est également reliée une boîte de dégazage, ledit procédé comportant:
- une étape d'installation d'un cylindre de charge sur la boîte de dégazage,
- une étape d'installation d'un premier tuyau de dégazage entre une purge disposée en entrée d'un échangeur du circuit caloporteur de la batterie de traction et le cylindre de charge,
- une étape d'installation d'un deuxième tuyau de dégazage entre une purge disposée en sortie d'un aérotherme du circuit caloporteur de l'habitacle et le cylindre de charge,
- une étape de dégazage du circuit caloporteur du groupe motopropulseur électrique et du circuit caloporteur de l'habitacle,
- une étape d'arrêt du dégazage du circuit caloporteur de l'habitacle, et
- une étape de dégazage du circuit caloporteur de la batterie de traction.

L'invention permet ainsi de réaliser un dégazage optimal des circuits caloporteurs, de sorte que les recharges de la batterie pourront être réalisées dans tous les modes sans risque d'arrêt de la recharge pour raison de surchauffe du module de recharge OBCDC.

Selon une mise en œuvre de l'invention, l'étape de dégazage du circuit caloporteur du groupe motopropulseur électrique et du circuit caloporteur de l'habitacle comporte une étape d'activation d'une pompe du circuit caloporteur du groupe motopropulseur électrique puis une étape d'activation d'une pompe du circuit caloporteur de l'habitacle.

Selon une mise en œuvre de l'invention, pour augmenter un débit à l'intérieur du tuyau de dégazage relié à la purge disposée en sortie de l'aérotherme, ledit procédé comporte une étape de pincement d'un tuyau de sortie de l'aérotherme.

Selon une mise en œuvre de l'invention, pour arrêter le dégazage du circuit caloporteur de l'habitacle, ledit procédé comporte une étape de commande d'une électrovanne du circuit caloporteur de l'habitacle pour isoler le circuit caloporteur de l'habitacle et une étape d'arrêt de la pompe du circuit caloporteur de l'habitacle.

Selon une mise en œuvre de l'invention, suite à l'arrêt du dégazage du circuit caloporteur de l'habitacle, ledit procédé comporte une étape de retrait du tuyau de dégazage relié à la purge disposée en sortie de l'aérotherme du circuit caloporteur de l'habitacle et une étape de fermeture d'une vis de purge correspondante ou une étape de pincement dudit tuyau de dégazage.

Selon une mise en œuvre de l'invention, pour réaliser le dégazage du circuit caloporteur de la batterie de traction, ledit procédé comporte:
- une première phase de fonctionnement dans laquelle l'électrovanne du circuit caloporteur de la batterie de traction est commandée de façon à mettre en communication le circuit caloporteur de la batterie de traction et le circuit caloporteur du groupe motopropulseur électrique tandis que la pompe du circuit caloporteur du groupe motopropulseur électrique est activée pour faire entrer un liquide caloporteur à l'intérieur du circuit caloporteur de la batterie de traction, et
- une deuxième phase de fonctionnement dans laquelle l'électrovanne du circuit caloporteur de la batterie de traction est commandée de façon à isoler le circuit caloporteur de la batterie de traction tandis que la pompe du circuit caloporteur de la batterie de traction est activée pour que le liquide caloporteur pousse l'air à l'intérieur du circuit caloporteur de la batterie de traction.

Selon une mise en œuvre de l'invention, la première phase de fonctionnement et la deuxième phase de fonctionnement sont réalisées en alternance.

Selon une mise en œuvre de l'invention, la première phase de fonctionnement et la deuxième phase de fonctionnement sont de durée égale.

Selon une mise en œuvre de l'invention, lors de l'installation d'un tuyau de dégazage, ledit procédé comporte les étapes suivantes :
- pincer le tuyau de dégazage,
- dévisser une vis de purge,
- introduire le tuyau de dégazage à l'intérieur de la purge,
- mettre en place un dispositif de maintien du tuyau de dégazage sur la purge,
- faire revenir le tuyau de dégazage au cylindre de charge en veillant à créer une pente douce et régulière sans point bas, et
- attacher le tuyau de dégazage dans le cylindre de charge.

Selon une mise en œuvre de l'invention, lors du dégazage des circuits caloporteurs, ledit procédé comporte une étape d'ajout régulier de liquide caloporteur dans le cylindre de charge pour compenser un volume d'air dégazé.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique des différents circuits caloporteurs d'un véhicule électrique avec lesquels est mis en œuvre le procédé de dégazage selon l'invention;
[Fig. 2] La figure 2 est une vue en perspective d'une purge disposée en entrée d'un refroidisseur du circuit caloporteur de la batterie;
[Fig. 3] La figure 3 est une vue en perspective d'une purge disposée en sortie d'un aérotherme du circuit caloporteur de l'habitacle.

Les éléments identiques, similaires, ou analogues conservent la même référence d'une figure à l'autre.

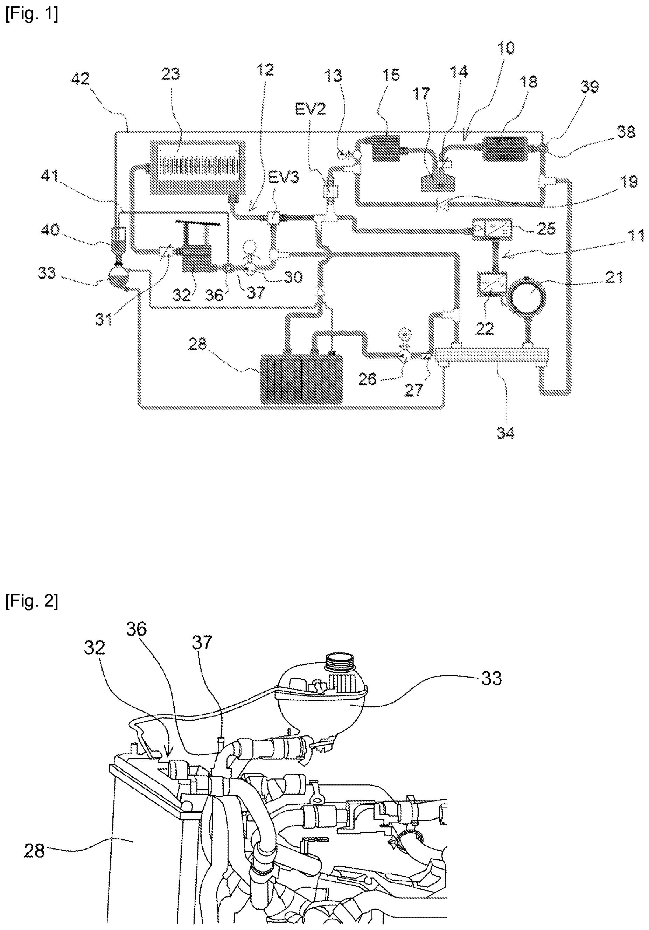

La figure 1 montre les différents circuits caloporteurs installés dans un véhicule automobile de type électrique consistant en un circuit caloporteur de l'habitacle 10, un circuit caloporteur du groupe motopropulseur électrique 11, et un circuit caloporteur d'une batterie de traction 12 apte à alimenter électriquement le groupe motopropulseur électrique 11.

Le circuit caloporteur de l'habitacle 10, dit aussi circuit HT (pour "Haute Température"), est apte à réguler une température de l'habitacle du véhicule en fonction de la volonté des utilisateurs. Ce circuit caloporteur 10 est donc apte à refroidir ou réchauffer l'habitacle. Ce circuit caloporteur 10 comprend une électrovanne deux voies EV2 qui permet d'isoler ou de mettre en communication fluidique le circuit caloporteur de l'habitacle 10 avec le circuit caloporteur du groupe motopropulseur électrique 11. Par défaut, lorsqu'elle est inactive, l'électrovanne EV2 est ouverte de façon à mettre en communication le circuit caloporteur de l'habitacle 10 avec le circuit caloporteur du groupe motopropulseur électrique 11. Lorsqu'elle est active, l'électrovanne EV2 est fermée de façon à isoler le circuit caloporteur de l'habitacle 10.

Une pompe 13 assure une circulation du liquide caloporteur, en général de l'eau contenant de l'antigel, à l'intérieur du circuit caloporteur 10.

Une sonde de température 14 permet de mesurer la température de l'eau circulant à l'intérieur du circuit caloporteur de l'habitacle 10.

Un condenseur 15 dit "water condenser" est un échangeur eau/réfrigérant (sorti du compresseur de climatisation) permettant de refroidir le liquide du circuit caloporteur 10. Ce condenseur 15 est également un composant de la pompe à chaleur du véhicule automobile.

Un dispositif de chauffage 17 dit "water heater" en anglais consiste en une résistance chauffante permettant de chauffer le liquide caloporteur du circuit caloporteur de l'habitacle 10.

Un aérotherme 18 consiste en un échangeur eau/air servant à chauffer ou refroidir l'air qui sera pulsé dans l'habitacle.

L'élément référencé 19 correspond à un clapet anti-retour.

Le circuit caloporteur du groupe motopropulseur électrique 11, dit circuit BT (pour "Basse Température"), est apte à refroidir les différents composants dudit groupe motopropulseur électrique, à savoir la machine électrique tournante 21, le module électronique de puissance 22 comportant un onduleur connecté électriquement d'une part à la machine électrique tournante 21 et d'autre part à la batterie de traction 23 du véhicule, ainsi que le module de recharge 25 appelé OBCDC (pour "On-Board Charger" à courant continu) comportant un chargeur et un transformateur.

A cet effet, le circuit caloporteur du groupe motopropulseur électrique 11 comprend une pompe 26 pour faire circuler le liquide caloporteur à l'intérieur du circuit caloporteur 11.

Une sonde de température 27 permet de mesurer la température de liquide circulant à l'intérieur du circuit caloporteur 11.

Un radiateur 28 permet de refroidir le liquide caloporteur du circuit 11. Ce radiateur 28 est avantageusement pourvu d'un Groupe Moto-Ventilateur (GMV) qui se déclenche en fonction de la température mesurée par la sonde de température 27.

Le circuit caloporteur de la batterie de traction 12, dit circuit TBT (pour "Très Basse Température") permet de réguler la température de la batterie de traction 23 pour optimiser son fonctionnement.

Lorsque la batterie de traction 23 est trop froide, ses performances sont réduites aussi bien lors des phases de charge (les durées de charge sont augmentées) que lors des phases de roulage (la batterie de traction 23 fournit alors une énergie limitée au groupe motopropulseur). Le circuit caloporteur 12 doit donc comporter un système de réchauffement et un système de refroidissement de la batterie de traction 23. Dans le présent mode de réalisation, le système de réchauffement utilisé pour réchauffer la batterie de traction 23 est celui du circuit caloporteur de l'habitacle 10. Autrement dit, il est possible de se passer d'un système de réchauffement dédié pour la batterie 23.

Plus précisément, le circuit caloporteur de la batterie 12 comprend une électrovanne trois voies EV3 qui permet d'isoler ou de mettre en communication le circuit caloporteur de la batterie 12 avec le circuit caloporteur du groupe motopropulseur électrique 11. Par défaut, lorsque l'électrovanne EV3 est inactive, l'électrovanne EV3 est fermée de façon à isoler le circuit caloporteur de la batterie de traction 12. Lorsque l'électrovanne EV3 est active, l'électrovanne EV3 est ouverte de façon à mettre en communication le circuit caloporteur de la batterie de traction 12 avec le circuit caloporteur du groupe motopropulseur électrique 11.

Une pompe 30 permet de faire circuler le liquide caloporteur à l'intérieur du circuit 12. Une sonde de température 31 permet de mesurer la température de liquide à l'intérieur du circuit caloporteur 12. Un échangeur eau/réfrigérant 32 dit "chiller" en anglais permet de refroidir le liquide caloporteur du circuit 12. Le réfrigérant est celui du circuit de climatisation.

Par ailleurs, un vase d'expansion 33 appelé également boîte de dégazage 33 est en communication fluidique avec un collecteur 34 auquel sont reliés les trois circuits de refroidissement 10, 11, 12.

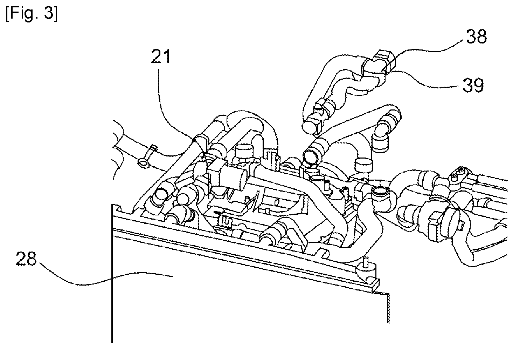

Par ailleurs, comme on peut le voir sur les figures 1 et 2, une purge 36 associée à une vis de purge 37 est prévue en entrée de l'échangeur 32 (chiller) du circuit caloporteur de la batterie 12. Comme on peut le voir sur les figures 1 et 3, une purge 38 associée à une vis de purge 39 est prévue en sortie de l'aérotherme 18 du circuit caloporteur de l'habitacle 10.

Au cours d'une phase de préparation de la procédure de dégazage, l'opérateur visse un cylindre de charge 40 sur un goulot de la boîte de dégazage 33 en le laissant fermé pour l'installation des tuyaux de dégazage. Cela permet d'éviter les appels d'air. L'opérateur installe ensuite un premier tuyau de dégazage 41 entre la purge 36 disposée en entrée de l'échangeur (chiller) 32 et le cylindre de charge 40. L'opérateur installe un deuxième tuyau de dégazage 42 entre la purge 38 disposée en sortie de l'aérotherme 18 et le cylindre de charge 40.

A cette fin, pour chacun des deux tuyaux de dégazage 41, 42, l'opérateur effectue les opérations suivantes:
- pincer le tuyau de dégazage 41, 42,
- dévisser une vis de purge 37, 39 correspondante,
- introduire rapidement le tuyau de dégazage 41, 42 à l'intérieur de la purge 37, 39,
- mettre en place un dispositif de maintien du tuyau de dégazage sur la purge, tel qu'un collier ou un rilsan,
- faire revenir le tuyau de dégazage 41, 42 au cylindre de charge 40 en veillant à créer une pente douce et régulière sans point bas, et
- attacher le tuyau de dégazage dans le cylindre de charge 40.

L'opérateur introduit ensuite environ 1L de liquide de refroidissement dans le cylindre de charge 40 et l'ouvre en tournant la poignée et en la poussant vers le bas. La pince de type pince à durite peut ensuite être retirée des tuyaux de dégazage 41, 42.

Pendant le dégazage, il faudra ajouter régulièrement du liquide caloporteur dans le cylindre de charge 40 pour compenser le volume d'air dégazé. Lors des ajouts de liquide dans le cylindre de charge 40, il faut veiller à ne pas dépasser le milieu du cylindre de charge 40 pour éviter les débordements lors des manipulations des électrovannes EV2, EV3 et des pompes 13, 26, 30.

L'opérateur commence la procédure de dégazage en activant la pompe BT 26 et en lançant un chronomètre (t = 0 min). Le circuit caloporteur BT du groupe motopropulseur électrique 11 et le circuit caloporteur HT de l'habitacle 10 se dégazent. Les différents éléments des circuits présentent alors les états suivants:

| EV3 | EV2 | Pompe BT | Pompe TBT | Pompe HT |
|---|---|---|---|---|
| INACTIVE | INACTIVE | MARCHE | ARRET | ARRET |

- A t = 5 min (durée calibrable en fonction de l'architecture du circuit de refroidissement), l'opérateur met en fonctionnement la pompe HT 13. Cette configuration dure de préférence 15 min. Le dégazage du radiateur 28 s'accélère.

Le débit dans le tuyau de dégazage 42 inséré dans la purge 38 de l'aérotherme 18 doit s'amorcer mais le débit reste insuffisant pour dégazer correctement. Il faut mettre une pince durite sur le tuyau de sortie de l'aérotherme 18 et la fermer légèrement jusqu'à augmentation suffisante du débit dans le tuyau de dégazage 42.

| EV3 | EV2 | Pompe BT | Pompe TBT | Pompe HT |
|---|---|---|---|---|
| INACTIVE | INACTIVE | MARCHE | ARRET | MARCHE |

- A t = 20 min (durée calibrable en fonction de l'architecture du circuit de refroidissement), l'opérateur active l'électrovanne EV2 en l'alimentant et coupe l'alimentation de la pompe HT 13. L'opérateur retire le tuyau de dégazage 42 de la sortie de l'aérotherme 18 et ferme la vis de purge 39 ou utilise la pince pour pincer le tuyau de dégazage 42 au plus près de la purge 38.
- A t = 22 min (durée calibrable en fonction de l'architecture du circuit de refroidissement), l'opérateur alimente l'électrovanne EV3.

A partir de cette étape le circuit caloporteur HT de l'habitacle 10 ne sera plus activé et donc plus dégazé.

| EV3 | EV2 | Pompe BT | Pompe TBT | Pompe HT |
|---|---|---|---|---|
| ACTIVE | ACTIVE | MARCHE | ARRET | ARRET |

Une telle configuration permet de faire entrer du liquide caloporteur à l'intérieur du circuit caloporteur TBT de la batterie de traction 12.
- A t = 27 min (durée calibrable en fonction de l'architecture du circuit de refroidissement), l'opérateur met en fonctionnement la pompe TBT 30 et coupe l'alimentation de l'électrovanne EV3. A partir de cette étape deux positions d'actionneurs seront mises en alternance toutes les 5 minutes.

| EV3 | EV2 | Pompe BT | Pompe TBT | Pompe HT |
|---|---|---|---|---|
| INACTIVE | ACTIVE | MARCHE | MARCHE | ARRET |

Une telle configuration permet au liquide caloporteur de pousser l'air à l'intérieur du circuit caloporteur de la batterie de traction 12.
- A t = 32 min (durée calibrable en fonction de l'architecture du circuit de refroidissement), l'opérateur coupe l'alimentation de la pompe TBT 30 et alimente l'électrovanne EV3 pour la refaire passer à l'état actif.

| EV3 | EV2 | Pompe BT | Pompe TBT | Pompe HT |
|---|---|---|---|---|
| ACTIVE | ACTIVE | MARCHE | ARRET | ARRET |

- A t = 37 min (durée calibrable en fonction de l'architecture du circuit de refroidissement), l'opérateur alimente la pompe TBT 30 et coupe l'alimentation de l'électrovanne EV3.

| EV3 | EV2 | Pompe BT | Pompe TBT | Pompe HT |
|---|---|---|---|---|
| INACTIVE | ACTIVE | MARCHE | MARCHE | ARRET |

- A t = 42 min (durée calibrable en fonction de l'architecture du circuit de refroidissement), l'opérateur coupe l'alimentation de la pompe TBT 30 et active l'électrovanne EV3.

| EV3 | EV2 | Pompe BT | Pompe TBT | Pompe HT |
|---|---|---|---|---|
| ACTIVE | ACTIVE | MARCHE | ARRET | ARRET |

- A t = 47 min (durée calibrable en fonction de l'architecture du circuit de refroidissement), l'opérateur éteint l'ensemble des pompes 13, 26, 30 ainsi que les électrovannes EV2, EV3.

| EV3 | EV2 | Pompe BT | Pompe TBT | Pompe HT |
|---|---|---|---|---|
| INACTIVE | INACTIVE | ARRET | ARRET | ARRET |

A la fin de la procédure de dégazage, le procédé comporte les étapes suivantes:
- refermer le cylindre de charge 40 (tirer la poignée vers le haut et tourner),
- retirer les tuyaux de dégazage 41, 42 et refermer les vis de purge 37, 39,
- retirer le cylindre de charge 40 en le dévissant,
- aspirer avec une seringue le liquide superflu de la boîte de dégazage 33,
- remettre le bouchon sur la boîte de dégazage 33.

Si éventuellement, il reste une faible quantité d'air à l'intérieur d'un circuit caloporteur 10, 11, 12, cette faible quantité d'air sera dégazée en roulant. Il faudra vérifier après quelques kilomètres parcourus que le niveau de liquide caloporteur est compris entre le minimum et le maximum de la boîte de dégazage 33. Cette vérification est réalisée à froid. Si le niveau est trop faible, il est nécessaire de faire l'appoint en liquide caloporteur.

## Revendications

1. Procédé de dégazage d'un ensemble de circuits caloporteurs d'un véhicule automobile électrique comportant un circuit caloporteur d'un habitacle (10), un circuit caloporteur d'un groupe motopropulseur électrique (11), et un circuit caloporteur d'une batterie de traction (12), lesdits circuits caloporteurs (10, 11, 12) étant reliés à un collecteur (34) auquel est également reliée une boîte de dégazage (33), **caractérisé en ce que** ledit procédé comporte:
- une étape d'installation d'un cylindre de charge (40) sur la boîte de dégazage (33),
- une étape d'installation d'un premier tuyau de dégazage (41) entre une purge (36) disposée en entrée d'un échangeur (32) du circuit caloporteur de la batterie de traction (12) et le cylindre de charge (40),
- une étape d'installation d'un deuxième tuyau de dégazage (42) entre une purge (38) disposée en sortie d'un aérotherme (18) du circuit caloporteur de l'habitacle (10) et le cylindre de charge (40),
- une étape de dégazage du circuit caloporteur du groupe motopropulseur électrique (11) et du circuit caloporteur de l'habitacle (10),
- une étape d'arrêt du dégazage du circuit caloporteur de l'habitacle (10), et
- une étape de dégazage du circuit caloporteur de la batterie de traction (12).

2. Procédé selon la revendication 1, **caractérisé en ce que** l'étape de dégazage du circuit caloporteur du groupe motopropulseur électrique (11) et du circuit caloporteur de l'habitacle (10) comporte une étape d'activation d'une pompe (26) du circuit caloporteur du groupe motopropulseur électrique (11) puis une étape d'activation d'une pompe (13) du circuit caloporteur de l'habitacle (10).

3. Procédé selon la revendication 2, **caractérisé en ce que** pour augmenter un débit à l'intérieur du tuyau de dégazage (42) relié à la purge (38) disposée en sortie de l'aérotherme (18), ledit procédé comporte une étape de pincement d'un tuyau de sortie de l'aérotherme (18).

4. Procédé selon l'une quelconque des revendications 1 à 3, **caractérisé en ce que** pour arrêter le dégazage du circuit caloporteur de l'habitacle (10), ledit procédé comporte une étape de commande d'une électrovanne (EV2) du circuit caloporteur de l'habitacle (10) pour isoler le circuit caloporteur de l'habitacle et une étape d'arrêt de la pompe (13) du circuit caloporteur de l'habitacle (10).

5. Procédé selon la revendication 4, **caractérisé en ce que** suite à l'arrêt du dégazage du circuit caloporteur de l'habitacle (10), ledit procédé comporte une étape de retrait du tuyau de dégazage (42) relié à la purge (38) disposée en sortie de l'aérotherme (18) du circuit caloporteur de l'habitacle (10) et une étape de fermeture d'une vis de purge (39) correspondante ou une étape de pincement dudit tuyau de dégazage (42).

6. Procédé selon l'une quelconque des revendications 1 à 5, **caractérisé en ce que** pour réaliser le dégazage du circuit caloporteur de la batterie de traction (12), ledit procédé comporte:
- une première phase de fonctionnement dans laquelle l'électrovanne (EV3) du circuit caloporteur de la batterie de traction (12) est commandée de façon à mettre en communication le circuit caloporteur de la batterie de traction (12) et le circuit caloporteur du groupe motopropulseur électrique (11) tandis que la pompe du circuit caloporteur du groupe motopropulseur électrique (11) est activée pour faire entrer un liquide caloporteur à l'intérieur du circuit caloporteur de la batterie de traction (12), et
- une deuxième phase de fonctionnement dans laquelle l'électrovanne du circuit caloporteur de la batterie de traction (12) est commandée de façon à isoler le circuit caloporteur de la batterie de traction (12) tandis que la pompe du circuit caloporteur de la batterie de traction (12) est activée pour que le liquide caloporteur pousse l'air à l'intérieur du circuit caloporteur de la batterie de traction (12).

7. Procédé selon la revendication 6, **caractérisé en ce que** la première phase de fonctionnement et la deuxième phase de fonctionnement sont réalisées en alternance.

8. Procédé selon la revendication 6 ou 7, **caractérisé en ce que** la première phase de fonctionnement et la deuxième phase de fonctionnement sont de durée égale.

9. Procédé selon l'une quelconque des revendications 1 à 8, **caractérisé en ce que**, lors de l'installation d'un tuyau de dégazage (41, 42), ledit procédé comporte les étapes suivantes :
- pincer le tuyau de dégazage (41, 42),
- dévisser une vis de purge (37, 39),
- introduire le tuyau de dégazage (41, 42) à l'intérieur de la purge (36, 38),
- mettre en place un dispositif de maintien du tuyau de dégazage (41, 42) sur la purge (36, 38),
- faire revenir le tuyau de dégazage (41, 42) au cylindre de charge (40) en veillant à créer une pente douce et régulière sans point bas, et
- attacher le tuyau de dégazage (41, 42) dans le cylindre de charge (40).

10. Procédé selon l'une quelconque des revendications 1 à 9, **caractérisé en ce que** lors du dégazage des circuits caloporteurs (10, 11, 12), ledit procédé comporte une étape d'ajout régulier de liquide caloporteur dans le cylindre de charge (40) pour compenser un volume d'air dégazé.

## Patentansprüche

1. Verfahren zum Entgasen einer Reihe von Wärmeübertragungskreisläufen eines Fahrzeugs mit elektrischem Motor, umfassend einen Wärmeübertragungskreislauf eines Fahrgastraums (10), einen Wärmeübertragungskreislauf eines elektrischen Antriebsstrangs (11) und einen Wärmeübertragungskreislauf einer Traktionsbatterie (12), wobei die Wärmeübertragungskreisläufe (10, 11, 12) mit einem Kollektor (34) verbunden sind, an den auch eine Entgasungsbox (33) angeschlossen ist, **dadurch gekennzeichnet, dass** das Verfahren umfasst:
- einen Schritt des Installierens eines Füllzylinders (40) auf der Entgasungsbox (33),
- einen Schritt des Installierens einer ersten Entgasungsleitung (41) zwischen einer am Einlass eines Wärmetauschers (32) des Wärmeübertragungskreislaufs der Traktionsbatterie (12) angeordneten Spülung (36) und dem Ladezylinder (40),
- einen Schritt des Einbaus einer zweiten Entgasungsleitung (42) zwischen einer am Auslass eines Lufterhitzers (18) des Wärmeübertragungskreislaufs des Fahrgastraums (10) angeordneten Spülung (38) und dem Ladezylinder (40),
- einen Schritt zum Entgasen des Wärmeübertragungskreislaufs des elektrischen Antriebsstrangs (11) und des Wärmeübertragungskreislaufs des Fahrgastraums (10),
- einen Schritt zum Stoppen der Entgasung des Wärmeübertragungskreislaufs des Fahrgastraums (10), und
- einen Schritt zum Entgasen des Wärmeübertragungskreislaufs der Traktionsbatterie (12).

2. Verfahren nach Anspruch 1, **dadurch gekennzeichnet, dass** der Schritt des Entgasens des Wärmeübertragungskreislaufs des elektrischen Antriebsstrangs (11) und des Wärmeübertragungskreislaufs des Fahrgastraums (10) einen Schritt des Aktivierens einer Pumpe (26) des Wärmeübertragungskreislaufs des elektrischen Antriebsstrangs (11) und dann einen Schritt des Aktivierens einer Pumpe (13) des Wärmeübertragungskreislaufs des Fahrgastraums (10) umfasst.

3. Verfahren nach Anspruch 2, **dadurch gekennzeichnet, dass** das Verfahren zum Erhöhen einer Strömungsrate innerhalb des Entgasungsrohrs (42), das mit der am Auslass des Lufterhitzers (18) angeordneten Spülung (38) verbunden ist, einen Schritt des Abklemmens eines Auslassrohrs des Lufterhitzers (18) umfasst.

4. Verfahren nach einem der Ansprüche 1 bis 3, **dadurch gekennzeichnet, dass** das Verfahren zum Stoppen der Entgasung des Wärmeübertragungskreislaufs des Fahrgastraums (10) einen Schritt zum Steuern eines Magnetventils (EV2) des Wärmeübertragungskreislaufs des Fahrgastraums (10) zum Isolieren des Wärmeübertragungskreislaufs des Fahrgastraums und einen Schritt zum Stoppen der Pumpe (13) des Wärmeübertragungskreislaufs des Fahrgastraums (10) umfasst.

5. Verfahren nach Anspruch 4, **dadurch gekennzeichnet, dass** es nach dem Stoppen der Entgasung des Wärmeübertragungskreislaufs des Fahrgastraums (10) einen Schritt des Entfernens des Entgasungsrohrs (42), das mit der am Auslass des Lufterhitzers (18) des Wärmeübertragungskreislaufs des Fahrgastraums (10) angeordneten Spülung (38) verbunden ist, und einen Schritt des Schließens einer entsprechenden Spülschraube (39) oder einen Schritt des Abklemmens des Entgasungsrohrs (42) umfasst.

6. Verfahren nach einem der Ansprüche 1 bis 5, **dadurch gekennzeichnet, dass** es zur Durchführung der Entgasung des Wärmeübertragungskreislaufs der Traktionsbatterie (12) Folgendes umfasst:
- eine erste Betriebsphase, in der das Magnetventil (EV3) des Wärmeübertragungskreislaufs der Traktionsbatterie (12) gesteuert wird, um den Wärmeübertragungskreislauf der Traktionsbatterie (12) mit dem Wärmeübertragungskreislauf des elektrischen Antriebsstrangs (11) zu verbinden, während die Pumpe des Wärmeübertragungskreislaufs des elektrischen Antriebsstrangs (11) aktiviert wird, um eine Wärmeübertragungsflüssigkeit in den Wärmeübertragungskreislauf der Traktionsbatterie (12) zu bringen, und
- eine zweite Betriebsphase, in der das Magnetventil des Wärmeübertragungskreislaufs der Traktionsbatterie (12) gesteuert wird, um den Wärmeübertragungskreislauf der Traktionsbatterie (12) zu isolieren, während die Pumpe des Wärmeübertragungskreislaufs der Traktionsbatterie (12) aktiviert wird, sodass die Wärmeübertragungsflüssigkeit die Luft im Inneren des Wärmeübertragungskreislaufs der Traktionsbatterie (12) verdrängt.

7. Verfahren nach Anspruch 6, **dadurch gekennzeichnet, dass** die erste Betriebsphase und die zweite Betriebsphase abwechselnd durchgeführt werden.

8. Verfahren nach Anspruch 6 oder 7, **dadurch gekennzeichnet, dass** die erste Betriebsphase und die zweite Betriebsphase gleich lang sind.

9. Verfahren nach einem der Ansprüche 1 bis 8, **dadurch gekennzeichnet, dass** es bei der Installation einer Entgasungsleitung (41, 42) folgende Schritte umfasst:
- das Entgasungsrohr (41, 42) abklemmen,
- eine Entlüftungsschraube (37, 39) herausschrauben,
- das Entgasungsrohr (41, 42) in die Entlüftungsöffnung (36, 38) einführen,
- eine Vorrichtung zum Halten des Entgasungsrohres (41, 42) an der Entlüftungsöffnung (36, 38) anzubringen,
- die Entgasungsleitung (41, 42) wieder zum Füllzylinder (40) zurückführt, wobei darauf zu achten ist, dass ein sanftes und gleichmäßiges Gefälle ohne Tiefpunkt entsteht, und
- Entgasungsrohr (41, 42) im Füllzylinder (40) befestigen.

10. Verfahren nach einem der Ansprüche 1 bis 9, **dadurch gekennzeichnet, dass** es während der Entgasung der Wärmeübertragungskreisläufe (10, 11, 12) einen Schritt umfasst, bei dem dem Ladezylinder (40) regelmäßig Wärmeübertragungsflüssigkeit hinzugefügt wird, um ein Volumen entgaster Luft auszugleichen.

## Claims

1. Method for degassing a set of heat transfer circuits of an electric motor vehicle comprising a heat transfer circuit of a passenger compartment (10), a heat transfer circuit of an electric powertrain (11), and a heat transfer circuit of a traction battery (12), said heat transfer circuits (10, 11, 12) being connected to a collector (34) to which a degassing box (33) is also connected, **characterized in that** said method comprises:
- a step of installing a charging cylinder (40) on the degassing box (33),
- a step of installing a first degassing pipe (41) between a purge (36) arranged at the inlet of an exchanger (32) of the heat transfer circuit of the traction battery (12) and the charging cylinder (40),
- a step of installing a second degassing pipe (42) between a purge (38) arranged at the outlet of an air heater (18) of the heat transfer circuit of the passenger compartment (10) and the charging cylinder (40),
- a step of degassing the heat transfer circuit of the electric powertrain (11) and the heat transfer circuit of the passenger compartment (10),
- a step of stopping the degassing of the heat transfer circuit of the passenger compartment (10), and
- a step of degassing the heat transfer circuit of the traction battery (12).

2. Method according to claim 1, **characterized in that** the step of degassing the heat transfer circuit of the electric powertrain (11) and the heat transfer circuit of the passenger compartment (10) comprises a step of activating a pump (26) of the heat transfer circuit of the electric powertrain (11) then a step of activating a pump (13) of the heat transfer circuit of the passenger compartment (10).

3. Method according to claim 2, **characterized in that** to increase a flow rate inside the degassing pipe (42) connected to the purge (38) arranged at the outlet of the air heater (18), said method comprises a step of pinching an outlet pipe of the air heater (18).

4. Method according to any one of claims 1 to 3, **characterized in that** to stop the degassing of the heat transfer circuit of the passenger compartment (10), said method comprises a step of controlling a solenoid valve (EV2) of the heat transfer circuit of the passenger compartment (10) to isolate the heat transfer circuit of the passenger compartment and a step of stopping the pump (13) of the heat transfer circuit of the passenger compartment (10).

5. Method according to claim 4, **characterized in that** following the stopping of the degassing of the heat transfer circuit of the passenger compartment (10), said method comprises a step of removing the degassing pipe (42) connected to the purge (38) arranged at the outlet of the air heater (18) of the heat transfer circuit of the passenger compartment (10) and a step of closing a corresponding purge screw (39) or a step of pinching said degassing pipe (42).

6. Method according to any one of claims 1 to 5, **characterized in that** to carry out the degassing of the heat transfer circuit of the traction battery (12), said method comprises:
- a first operating phase in which the solenoid valve (EV3) of the heat transfer circuit of the traction battery (12) is controlled so as to put the heat transfer circuit of the traction battery (12) into communication with the heat transfer circuit of the electric powertrain (11) while the pump of the heat transfer circuit of the electric powertrain (11) is activated to bring a heat transfer liquid into the heat transfer circuit of the traction battery (12), and
- a second operating phase in which the solenoid valve of the heat transfer circuit of the traction battery (12) is controlled so as to isolate the heat transfer circuit of the traction battery (12) while the pump of the heat transfer circuit of the traction battery (12) is activated so that the heat transfer liquid pushes the air inside the heat transfer circuit of the traction battery (12).

7. Method according to claim 6, **characterized in that** the first operating phase and the second operating phase are carried out alternately.

8. Method according to claim 6 or 7, **characterized in that** the first operating phase and the second operating phase are of equal duration.

9. Method according to any one of claims 1 to 8, **characterized in that**, when installing a degassing pipe (41, 42), said method comprises the following steps:
- pinch the degassing pipe (41, 42),
- unscrew a bleed screw (37, 39),
- insert the degassing pipe (41, 42) inside the purge (36, 38),
- install a device for holding the degassing pipe (41, 42) on the purge (36, 38),
- return the degassing pipe (41, 42) to the charging cylinder (40) while ensuring that a gentle and regular slope is created without a low point, and
- attach the degassing pipe (41, 42) in the charging cylinder (40).

10. Method according to any one of claims 1 to 9, **characterized in that** during the degassing of the heat transfer circuits (10, 11, 12), said method comprises a step of regularly adding heat transfer liquid to the charging cylinder (40) to compensate for a volume of degassed air.
